# EUROPEAN PATENT SPECIFICATION

(11) **EP 1 482 579 B1**
(45) Date of publication and mention of the grant of the patent: **13.07.2011**
(21) Application number: 04012487.7
(22) Date of filing: 26.05.2004
(51) Int. Cl.: H01M 2/16, H01M 2/18

(54) **An envelope separator for electrode plates of batteries of an improved type, and a battery comprising such a separator**
Separatorhüllen für verbesserte Batterie-Elektrodenplatte und eine Batterie mit einem solchen Separator
Un séparateur enveloppe pour plaques d'électrode de batteries améliorées et une batterie comprenant un tel séparateur

(30) Priority: 30.05.2003 IT TO20030092
(43) Date of publication of application: 01.12.2004
(73) Proprietor: Daramic, LLC, Charlotte, NC 28273 (US)
(72) Inventor: Fossati, Giuseppe, 24050 Mozzanica (Bergamo) (IT); Dreyer, Daniel, 67390 Mackenheim (FR); Caublot, Jean-Martin, 67600 Ebersheim (FR)
(74) Representative: Schröder, Richard

(56) References cited:
- EP-A- 0 484 295
- EP-A- 0 899 801
- GB-A- 2 088 118
- JP-A- 2 160 365
- JP-A- 57 103 262
- US-A- 4 855 196

## Description

The present invention generally relates to batteries for starting motor vehicles, and in particular to envelope separators used for wrapping the plates which constitute the negative or positive electrodes and thereby for separating the electrode plates of opposite polarity from each other, of the type described in the preamble of claim 1.

Such envelope separators are generally produced by a sheet of microporous material being folded over on itself along a central folding line and the lateral edges of the sheet being welded.

It is known that modern cars equipped with high loads demand, from the batteries installed in them, high levels of performance of resistance to a high number of charging and discharging cycles.

In conventional batteries of the type known in the sector as "heavy duty", this resistance is obtained by polyethylene separators being used with a mat of glass wool which is applied by adhesive bonding. The active material of the plates, in particular of the positive plates, changes volume during the charging and discharging phases. This fact, together with the vibrations to which a battery installed in a vehicle is normally subjected, thus means that the active material of the plates can become detached from the plates, risking a short-circuit of the battery being brought about. The separator folded in the manner of an envelope around a plate has the function of preventing the active material which has been detached from being dispersed inside the battery.

The mat of glass wool, applied to that side of the separator which is directed towards the positive plate, in the condition in which the electrode plates are assembled inside the battery, serves to keep the active material in position by compression during the charging and discharging phases of the battery. Furthermore, the compression of the groups of plates in the battery provides the plate with a degree of resistance to vibrations.

However, the separators described above have a high level of electrical resistivity (greater than 80 mohm·cm²) which limits the performance levels during rapid discharge when cold, and are relatively expensive owing to the application of the mat by adhesive bonding.

GB-A-2 088 118 relates to battery separators having a polyethylene base sheet over which in a preferred embodiment a non-woven polyester fabric sheet is laid. Both sheets are folded along a first fold along the length of the sheets around the bottom edge of electrode plates and thereafter e.g. in a zig-zag mode along edges perpendicular to the first fold to sandwich the electrode plates between the folded separator sheet and the non-woven fabric sheet. By that, a stack of plates is formed, whereby each plate in the stack is separated from the adjacent plate by electrically insulating separator material and whereby the separator material for the stack of plates comprises a one-piece separator sheet.

US-A-4 855 196 relates to multilaminate materials for separating electrodes of opposite polarity in electrochemical cell and battery assemblies, whereby the multilaminate materials comprise a microporous separator which serves to electrically insulate electrodes of opposite polarity, at least one layer of semi-rigid, porous supporting material and at least one layer of flexible, microporous retaining mat. The layer of flexible, microporous retaining mat may comprise a non-woven acid-resistant material, whereby suitable materials comprise polyester. The layer of semi-rigid, porous supporting material is the central layer of the multilaminate materials of D2 and provides support for and prevents deformation of the flexible, microporous retaining mat and thus prevents shedding of active material from the electrode plate during cell charging and operation. The flexible, microporous retaining mat, i.e. the sheet of polyester matting can be bonded e.g. by ultrasonic bonding, i.e. by welding, to the semi-rigid, porous supporting layer. The semi-rigid, porous supporting layer is then bonded to the microporous separator.

The object of the present invention is to provide separators for batteries having relatively high performance levels both for a high number of charging/discharging cycles and for rapid discharge when cold, and whose manufacture is relatively simple and economical.

This object is achieved according to the invention by an envelope separator having the features defined in claim 1.

Specific forms of embodiment of the invention are defined in the dependent claims.

A preferred but non-limiting embodiment of the invention will now be described with reference to the appended drawings, in which:
Figure 1 is a partially sectioned plan view of an envelope separator according to the invention in an enfolded condition, before assembly;
Figure 2 is a sectioned view of the separator of Figure 1 taken along line II-II in that Figure;
Figure 3 is an enlarged view of a detail of Figure 2, indicated by arrow III in that Figure;
Figure 4 is a view of the separator of Figure 1 in a condition folded over an electrode plate; and

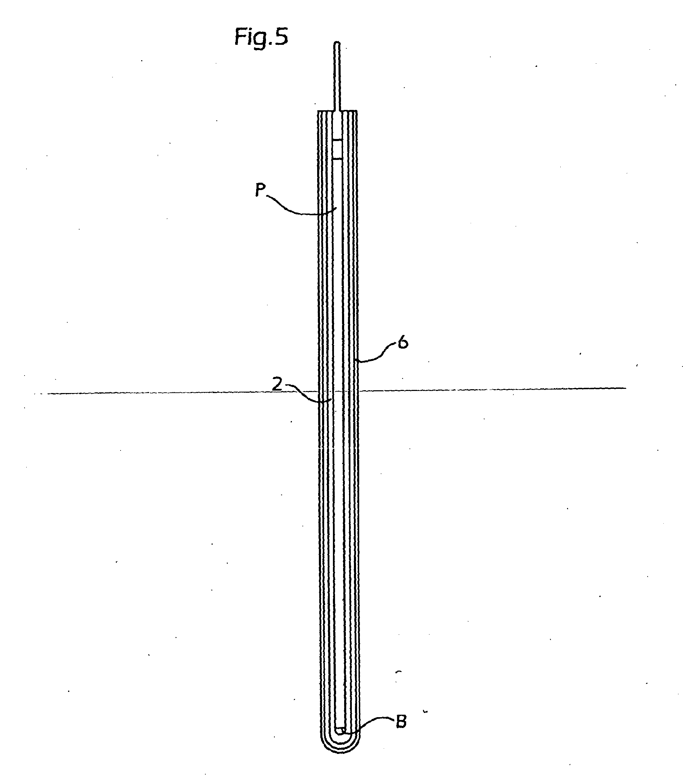

Figure 5 is a sectioned view of the separator of Figure 4, taken along line V-V in that Figure.

With reference to the drawings, a separator of conventional type is designated 1 and comprises a microporous base sheet 2 of polyethylene having a substantially rectangular shape and a wall thickness which is almost uniform. At one face 2a of the sheet 2, a plurality of ribs 3 are formed which extend substantially parallel with a dimension of the sheet 2, preferably height h. These ribs 3, in the configuration in which the plates are assembled inside the battery, act as spacers between the electrodes of opposite polarity.

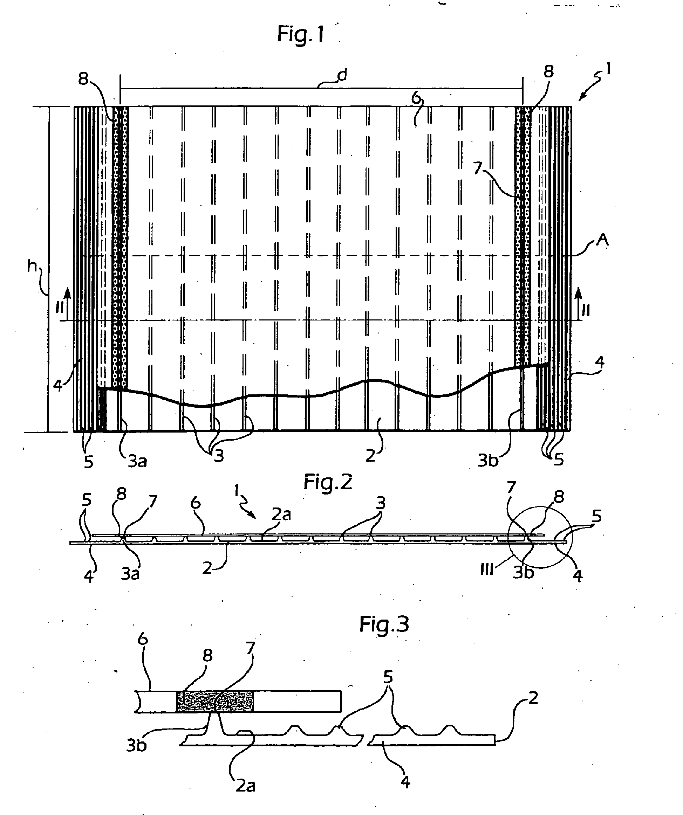

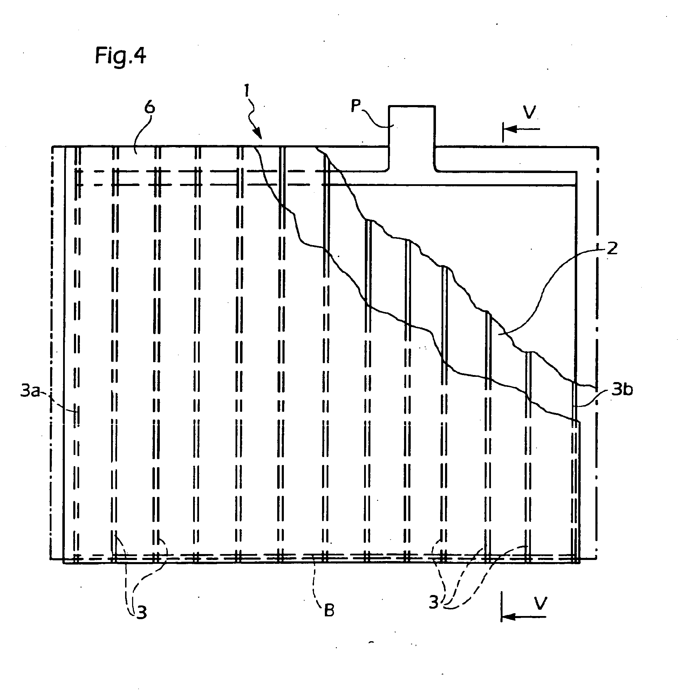

The base sheet 2 is intended to be folded over on itself along central folding line A which constitutes the base of the envelope, in the assembled condition illustrated in Figure 3, so as to envelope an electrode plate P (illustrated in Figure 4). Folding line A corresponds to an edge B (the lower edge) of the plate P, over which the separator 1 is wrapped. Lateral borders 4 of the sheet 2 have a plurality of ribs 5 having a height smaller than that of the ribs 3, with the function of strengthening the edge in the welding zone. The lateral borders 4 of the sheet 2 are in fact intended to be fixed to each other in the assembled condition of Figure 4 by means of ultrasonic welding or crimping.

According to the invention, a sheet of matting 6 is applied to the base sheet 3 so that it extends laterally over a width greater than the width of electrode plate P to be covered. This width is substantially defined in the base sheet 2 by the distance d between two of the spacer ribs 3 which are arranged in the end positions of the row formed by those ribs 3 (end ribs 3a and 3b).

This sheet of matting 6, which also has a substantially rectangular shape and substantially uniform thickness, is produced from polyester fibre. The sheet of matting 6 is ultrasonically welded to the base sheet 2 in predetermined welding regions 7 of the base sheet 2 so as to stabilise the sheet of matting 6 with a view to the wrapping of the separator 1 over plate P and the subsequent assembly of the groups of plates in the battery (not illustrated). These welding regions 7 are preferably arranged on the end spacer ribs 3a and 3b and correspond to strip-like welding regions 8 which are arranged on the sheet of matting 6, as illustrated in Figures 1 to 3.

The electrode plates P are produced in conventional manner, for example, by cutting from a continuous strip of expanded metal. The plates P obtained in this manner and provided with sharp edges have a predetermined width, for example, 144 mm.

The base sheet 2 is produced from a strip of polyethylene (not illustrated), in which the spacer ribs 3 extend in the direction of the length of the strip. This strip has a width greater than the width of plate P, for example, 160 mm, in order to allow the lateral borders 4 to be welded once the separator has been folded over the plate P.

The sheet of matting 6 is produced from a polyester fibre strip (not illustrated) which has a width greater than or equal to the width of plate P. This polyester fibre strip is placed close to the face of the polyethylene strip which is provided with spacer ribs 3. The strips placed close together parallel with each other are introduced into an ultrasonic welding device of known type (not illustrated) in such a manner that each end spacer rib 3a, 3b, with the respective welding region 8 of the polyester strip superimposed on it, is interposed between the sonotrode and the anvil for a continuous welding operation.

Once the above-mentioned strips have been welded, they are cut so as to produce a separator in the unfolded condition illustrated in Figure 1.

This separator is folded over an electrode plate P, as illustrated in Figure 4. According to requirements, the envelope separator can be applied to each of the negative plates or the positive plates of a battery. It is sufficient for the face having the mat to be arranged against the positive active material so that the separator 1 is folded over the face provided with the mat or over the other face according to whether the envelope separator is folded over the positive plates or the negative plates, respectively.

For example, in the configuration illustrated in Figure 4, plate P is a negative electrode plate so that mat 6 is arranged on the face 2a of the base sheet 2 that faces outwards.

The polyester fibre mat allows groups of plates to be assembled with a degree of compression so as to ensure that the active material is held in position during the charging and discharging phases of the battery, without impairing the performance during rapid discharge when cold because the electrical resistance thereof does not exceed 65 mohm·cm². Furthermore, its cost is compatible with use in the motor vehicle sector because the application of the mat is brought about by means of ultrasonic welding instead of adhesive bonding.

Furthermore, the fact that the mat has a width greater than the width of the plate allows each mat also to cover the sharp edges of the plates, preventing them from being able to cause puncturing of the polyethylene sheets of the separators in the assembled condition of the battery.

The fact that the welding is carried out on the end spacer ribs 3a and 3b allows a smaller contact surface between the strips. In this manner, it is possible to obtain a great concentration of energy and therefore rapid and efficient local fusion of the contact surfaces of the polyester strip and the polyethylene strip.

Naturally, the principle of the invention remaining the same, the forms of embodiment and details of construction may be varied widely with respect to those described and illustrated by way of non-limiting example. It will be appreciated that the scope of the invention includes batteries, particularly intended for starting motor vehicle engines, comprising envelope separators of the above-specified type.

## Claims

1. An envelope separator (1) for electrode plates (P) of batteries, comprising a polyethylene base sheet (2) which is folded along a folding line (A) which constitutes the base of the envelope, **characterized in that** it comprises a sheet of polyester fibre matting (6) which is welded to the base sheet (2) at welding regions (7) for fusion of the contact surfaces of the polyester fiber matting and the polyethylene base sheet which welding regions are arranged therein In such a manner that, in the condition in which the base sheet (2) is folded over the plate (P), the sheet of matting (6) envelopes the plate (P).

2. A separator according to claim 1, **characterized in that** the base sheet (2) and the sheet of matting (6) are ultrasonically welded.

3. A separator according to either of the preceding claims; wherein the base sheet (2) is provided with a plurality of elongate rib-like spacer formations (3), the welding regions (7) being arranged on the spacer ribs (3).

4. A separator according to claim 3, wherein the spacer formations (3) are arranged transversely relative to the folding line (A) of the base sheet (2), at least two of those spacer formations (3) defining the welding regions (7).

5. A separator according to claim 4, wherein the spacer formations (3) are arranged parallel with each other in order to form a row of ribs (3) arranged in the direction of the folding line (A), end spacer formations (3a, 3b) of the row defining the welding regions (7).

6. A separator according to any one of the preceding claims, wherein the width of the sheet of matting (6) is greater than or equal to the width of the electrode plate (P).

7. A battery for starting motor vehicle engines comprising an envelope separator (1) according to any one of the preceding claims.

8. A separator according to any one of the preceding claims, wherein the width of the sheet of matting (6) is less than the width of the base sheet (2).

## Patentansprüche

1. Taschenseparator (1) für Elektrodenplatten (P) von Batterien, umfassend eine Basisfolie (2) aus Polyethylen, die entlang einer Faltlinie (A), die die Basis der Tasche darstellt, gefaltet wird, **dadurch gekennzeichnet, dass** er eine folienartige Polyesterfasermatte (6) umfasst, die zum Verbinden der Kontaktflächen der Polyesterfasermatte und der Basisfolie aus Polyethylen in Schweißbereichen (7) an der Basisfolie (2) angeschweißt ist, wobei die Schweißbereiche so angeordnet sind, dass, wenn die Basisfolie (2) um die Platte (P) gelegt wird, die folienartige Matte (6) die Platte (P) umhüllt.

2. Separator nach Anspruch 1, **dadurch gekennzeichnet, dass** die Basisfolie (2) und die folienartige Matte (6) per Ultraschall verschweißt sind.

3. Separator nach einem der vorhergehenden Ansprüche, bei dem die Basisfolie (2) mit einer Vielzahl von länglichen stegartigen Abstandsstrukturen (3) versehen ist, wobei die Schweißbereiche (7) auf den Abstandsstegen (3) angeordnet sind.

4. Separator nach Anspruch 3, bei dem die Abstandsstrukturen (3) quer zur Faltlinie (A) der Basisfolie (2) angeordnet sind, wobei mindestens zwei dieser Abstandsstrukturen (3) die Schweißbereiche (7) definieren.

5. Separator nach Anspruch 4, bei dem die Abstandsstrukturen (3) parallel zueinander angeordnet sind und eine Reihe von Stegen (3) bilden, die in Richtung der Faltlinie (A) angeordnet sind, wobei die am Ende angeordneten Abstandsstrukturen (3a, 3b) der Reihe die Schweißbereiche (7) definieren.

6. Separator nach einem der vorhergehenden Ansprüche, bei dem die folienartige Matte (6) breiter als die Elektrodenplatte (P) oder genauso breit ist.

7. Starterbatterie für Motoren von Kraftfahrzeugen, die einen Taschenseparator (1) nach einem der vorhergehenden Ansprüche umfasst.

8. Separator nach einem der vorhergehenden Ansprüche, bei dem die folienartige Matte (6) schmaler als die Basisfolie (2) ist.

## Revendications

1. Séparateur en forme d'enveloppe (1) pour des plaques d'électrode (P) de batteries, comprenant une feuille de base en polyéthylène (2) qui est pliée le long d'une ligne de pliage (A) qui constitue la base de l'enveloppe, **caractérisé en ce qu'**il comprend une feuille de natte de fibres de polyester (6) qui est soudée à la feuille de base (2) au niveau de régions de soudage (7) pour la fusion des surfaces de contact de la natte de fibres de polyester et de la feuille de base en polyéthylène, lesquelles régions de soudage y sont disposées de telle manière que, dans l'état dans lequel la feuille de base (2) est repliée sur la plaque (P), la feuille de natte (6) enveloppe la plaque (P).

2. Séparateur selon la revendication 1, **caractérisé en ce que** la feuille de base (2) et la feuille de natte (6) sont soudées par ultrasons.

3. Séparateur selon l'une quelconque des précédentes revendications, dans lequel la feuille de base (2) est munie d'une pluralité de formations allongées servant d'entretoises en forme de nervures (3), les régions de soudage (7) étant disposées sur les nervures servant d'entretoises (3).

4. Séparateur selon la revendication 3, dans lequel les formations servant d'entretoises (3) sont disposées transversalement par rapport à la ligne de pliage (A) de la feuille de base (2), au moins deux de ces formations servant d'entretoises (3) définissant les régions de soudage (7).

5. Séparateur selon la revendication 4, dans lequel les formations servant d'entretoises (3) sont disposées parallèlement les unes aux autres afin de former une rangée de nervures (3) disposées dans la direction de la ligne de pliage (A), des formations d'extrémité servant d'entretoises (3a, 3b) de la rangée définissant les régions de soudage (7).

6. Séparateur selon l'une quelconque des précédentes revendications, dans lequel la largeur de la feuille de natte (6) est supérieure ou égale à la largeur de la plaque d'électrode (P).

7. Batterie de démarrage de moteurs de véhicule automobile comprenant un séparateur en forme d'enveloppe (1) selon l'une quelconque des précédentes revendications.

8. Séparateur selon l'une quelconque des précédentes revendications, dans lequel la largeur de la feuille de natte (6) est inférieure à la largeur de la feuille de base (2).
